# EUROPEAN PATENT SPECIFICATION

(11) **EP 2 220 001 B1**
(45) Date of publication and mention of the grant of the patent: **13.04.2016**
(21) Application number: 08854320.2
(22) Date of filing: 28.10.2008
(51) Int. Cl.: C02F 1/04, B01D 21/26, B01D 3/00, F28F 3/08, F28D 5/02, F28D 9/00, B01D 1/22, B01D 3/26, F28F 3/10, F28D 1/03

(54) **A MODULAR WATER DISTILLING DEVICE**
MODULARE WASSERDESTILLATIONSVORRICHTUNG
DISPOSITIF MODULAIRE DE DISTILLATION D'EAU

(30) Priority: 29.11.2007 DK 200701698
(43) Date of publication of application: 25.08.2010
(73) Proprietor: Idekontoret APS, 2970 Horsholm (DK)
(72) Inventor: ANDERSEN, Tom, Juul, 26697 Hjärnarp (SE)
(74) Representative: Nielsen, Charlotte
(86) International application number: PCT/DK2008/000378
(87) International publication number: WO 2009/068029

(56) References cited:
- WO-A1-2006/002636
- DE-A1- 2 346 857
- FR-A1- 2 583 738
- GB-A- 2 123 307
- SE-B- 390 379
- US-A- 4 402 793

## Description

### FIELD OF INVENTION

The present invention relates to water distilling devices. In particular the present invention relates to water distilling devices which are modular and allow assembly from a limited number of different components while allowing a plurality of different configurations.

### BACKGROUND OF THE INVENTION

Several solar powered multi effect distillation solutions for freshwater production have earlier been described. US-A-4.475.988, US-A-4.402.793, US-A-4.329.205 and JP 11.156341 all describe proposed implementations of a solar distillation system. However, none of the above mentioned applications has ever been brought to market due to the low efficiency, high manufacturing cost and high need of maintenance of the systems.

Any of the above systems is based on a number of heat conductive sheets/foils that through a number of stages will evaporate and condensate a fluid. The sheets/foils may be placed in any angle and the initial heat for the process may be added from any side of the system and then travel through the stages to reuse the energy. It is also given in any of the systems that the stages in the multiple effect systems must be air/vapour/water tight within the system and to the ambient in order to work.

FR 2583738 A1 discloses a distillation apparatus 1 that comprises a first and second metal plate 2, 3, 19 and a frame 27, 28, 29, 30, 31, 32, 32, 33, 34 forming a chamber. The frame has an inlet with a distributor and two outlets 25, 26. The apparatus comprises a plurality of frames arranged between the plates. The distillation apparatus 1 comprises wicks 22, 23, 24 that are in fluid communication with the fluid 6 to be distilled. However, contamination of the distilled water with the feed water occurs using the distillation apparatus of FR2583738 A1. There are no disclosure nor guidance of how to provide means for preventing such a contamination.

DE 2346856 A1 discloses a distillation apparatus that comprises a double cell 10 having an evaporation chamber 12 and a condensation chamber 14 that are separated from each other. The distillation apparatus is comprises number of vertically extending double cells 10 each comprising a first wall 16 and a second wall 18. A first distribution member 38 is arranged adjacent to the first wall 16 and a second distribution member 38 is arranged adjacent the second wall 18. A first feed unit 40 is arranged next to the first distribution member 38, while a second first feed unit 44 is arranged next to the second distribution member. A separator 42 that basically functions a sealing member is arranged between the feed units 40, 44. The double chamber construction renders the distillation apparatus of DT 2346856 A1 expensive.

The construction of the prior art systems are troubled by optimization of a number of parameters to ensure energy efficiency, consistent good water quality and yield. Most important are: a very precise spacing between sheets/foils; controlled air and vapour tightness; a very secure separation of the feed and distilled water flow; means for automated cleaning; administration of the heat energy in the system; water distribution; absorption of temperature expansion differences in materials used and rigidity of the system to withstand external impact. And finally: the system must be low cost. Thus, there is a need for a new design of a multi effect distillation system for mass production and easy assembly, operation and maintenance. In short, it is the object of the invention to provide an all-in-one frame for a multi effect distillation system, which ensures high efficiency, low cost and a simple construction of a multiple effect still.

### SUMMARY OF THE INVENTION

The present invention relates to a device for distilling a fluid, the device comprising:
- a first and a second plate;
- a frame with opposite outer surfaces being detachably attachable to inner surfaces of the first and second plates and having a shape by which at least one chamber is defined by the frame and the inner surfaces, the frame defining:
- an inlet for releasing the fluid into the chamber,
- a first outlet for releasing waste fluid from the chamber,
- a second outlet for releasing distilled fluid from the chamber, and
- a separator;
wherein the inlet is arranged to allow the fluid which is released into the chamber to flow in a first flow path along the inner surface of the first plate from the inlet towards the first outlet;
wherein the second outlet is arranged in flow communication with a second flow path along the inner surface of the second plate to capture fluid which is formed by condensing on the inner surface of the second plate; and wherein the separator is defined by an essentially plane element formed in one piece with the frame and extending from a location between the outlets in a direction towards the inlet and being arranged between the outer surfaces to separate a part of the chamber into a first space in which the first flow paths ends and a second space in which the second flow path ends.

### Distilling fluid

The fluid to be distilled may be any fluid containing water such as waste water, salt water, contaminated water or any other fluid from which water needs to be distilled (wine, alcohol, fruit juice, process water, pharmaceuticals a.s.o).

### Number of plates

In one embodiment, the device comprises a plurality of plates such as two, three, four, five, six etc. Between any to neighbouring plates are provided a frame such that a chamber is defined between such two plates and the frame. Accordingly, it will be appreciated that the number of chambers will be equal to the number of plates minus one, i.e. if the device comprises six plates, then five chambers are defined.

### Distance between plates

In order to obtain an effective evaporation, the distance between the lower evaporation surface and the upper condensation surface in a chamber should be as small as possible such as in the range of 2-50 mm, such as 3-20 mm, such as 3-15 mm. Due to the abutment between the plates and the frame, the distance between the plates are defined by the frame.

### Spacers between plates

Due to the small distance between the plates, the device may in some embodiments comprise spacers arranged to prevent two plates from contacting each other, e.g. as a result of bending of the plates due to gravity. In these embodiments the outer frame may be divided into a number of frames all sharing a common outer frame. The subdivision of the frame may be as an open structure allowing vapour to travel between the plates enclosed by the outer frame - or as individual compartments.

The division by spacers can be placed vertically or horizontally. Also, the spacers may be a moulded part of the outer frame or inserts to be post mounted into the structure.

### Plates - materials

The plates may comprise one or more of the following materials, metal, composites, ceramics and plastic. In one embodiment the outer surface of one or more of the plates are steel coated with an anti-corrosion layer, such as enamel/glazing. One or more of the plates may be coloured e.g. black, to attract heat or may be coated with a coating suitable for attracting heat such that the plates are heated, whereby the distillation process may be initiated. In one embodiment, the plates are made from an essentially planer sheet of metal.

### Plate sizes

The plates may have any size such as 130 cm * 50 cm, such as 100 cm * 50 cm, such as any other size. Limitations are the stiffness of the plate material since bending of the plates is to be avoided.

The plates are preferable as thin as possible, such as in the range of 0.5-10 mm such as in the range of 0.5-2 mm. It is important for the functionality that the separator sheet is held in place between the sheets/foils without bending and thereby risking mixture of the feed water and distillate. A support in form of a spacer may therefore be moulded into the separator, holding the separator in place. Once the feed water and the distillate are collected in the groove formed by the separator, the fluids are led towards the outlet holes by gravity. The bottom part of the frame may be angled towards the outlet to allow the fluids easier to run out by gravity. Stiffness enhancing means

The plates may define one or more profiles for increasing the surface of the plate and/or for enhancing its stiffness.

### Frame - shape

The frame may be ring-shaped and have a shape corresponding to the plates. In one embodiment the plates are quadrangular and the frame defines a quadrangular ring defining four sides and four edges. In another embodiment the plates are triangular and the frame defines a triangular ring defining three sides and three edges. In yet another embodiment the plates are circular and the frame defines a circular ring defining no edges and one single side.

### Frame - materials

The frame may be made of a material suitable to provide non-corrosion, water and air tightness, flexibility in a large temperature range, thermal isolation, UV- stability, opaqueness and should also be non-toxic. The frame may comprise one or more of the following materials, metal, plastic, rubber or glass. In one embodiment the frame comprises a composite material defining two or more layers.

It will be appreciated that it is desirable that, thermal energy is not conducted from one plate to another via the frame. Accordingly, the frame may comprise a material with low thermal conductivity, or may be shaped to reduce the thermal conductivity between the plates, e.g. by being made from a foamed material which due the low thermal conductivity of the air in the air pockets of the foamed material has low thermal conductivity.

### Size of frame

The frame should be shaped such that the two plates contacting the frame may overlap at least a part of the frame. Accordingly, the inner width of the frame (i.e. the width between inner surfaces of the ring-shaped frame element) should be smaller than the width of the plates. The same relationship is applies to the inner length of the frame and the length of the plates. It will be appreciated that the width/length of the plates should preferably be smaller than the outer length/width of the frame, as long as an overlap between the plates and the frame is ensured.

### Inlet/outlets

As described above the device comprises a first outlet for collecting waste fluid from the inner surface of the first plate and a second outlet for collecting distilled water from the second surface. The outlets are provided on each side of the separator, which serves to prevent that the distilled water is contaminated with the waste water.

In embodiments wherein the frame defines a quadrangular ring defining four sides, the outlets may be provided on a first side and the inlet may be provided on an opposite side.

Each of the inlet and the two outlets may be fluidly connected to respective flow passages defined by the frame and extending in a direction which defines a substantially right angle with one of the plates. In a device comprising two or more frames, the frames may be positioned such that said flow passages coincide, whereby water may flow from the flow passage of one frame to the flow passage of another frame. In order to prevent leakage between the frames a seal may be provided between the frames in the area adjacent to the flow passages.

### Separator

The separator and the frame may define a monolithic element i.e. be defined in one piece without seams. Preferably, the frame and the separator are manufactured by being moulded into one single element. The separator may define a right angel with the inner surface of a side of the frame such that the separator extends from a position between the outlets towards the inlet.

The separator may define an end portion and root portion. The root portion may be defined in the transition between the inner surface of the frame and the separator while the tip is defined in the opposite end of the separator i.e. at the position furthest away from the inner surface of the frame. It will be appreciated that in order to allow water to flow along either of the inner surfaces, the tip must be spaced apart from both said surfaces.

The size of the separator determines the amount of fluid in said first and second flow that can be held on each side of the separator. This is particularly important when the system is flushed or when the self draining of the system by gravity is troubled for some reason. In general the separator should be as small as possible such as 2-5cm in height or 2-IOcm in height or 3-15cm in height.

### Gutter

In one embodiment the inlet is formed with a gutter shaped groove extending transversely to the first flow path and being shaped to allow fluid entering the device through the inlet to be distributed over a width of the frame before being released onto the first surface. The gutter shaped groove may be detachably attachable to the frame. Alternatively, the gutter shaped groove and the frame may define a monolithic element, i.e. defining one element without a seam there between.

### Drip nose

To avoid the feed water from contacting the first plate which is used to collect the distilled water, the frame may comprises a drip nose which is provided above the gutter shaped groove. In one embodiment, the drip nose defines a groove opposite the gutter shaped groove, whereby a transversely extending flow channel is defined by the gutter shaped groove and said opposite groove. One advantage of such a channel is that water feed at a relatively high velocity into the inlet, will be prevented from flowing directly onto the first surface, and will instead be evenly distributed along the channel before it flows onto the first surface.

### Flow control element

In one embodiment the device comprises a flow controlling element covering at least a part of the gutter shaped groove and at least a part of the first surface, the flow controlling element may be adapted to control the velocity of liquid flowing from the inlet to the first outlet and/or to ensure an even distribution of the liquid over at least a part of the first surface. The flow controlling element may be adapted to facilitate capillary flow of feed water from the inlet towards the second outlet. In one embodiment, the flow controlling element comprises a textile woven material, or a fleece material or

The flow controlling element may comprise a retaining means adapted to be positioned in the gutter shaped groove; the retaining means may be a rod- shaped element. In one embodiment, the retaining means is wider that the passage defined between the gutter shaped groove and the opposite groove, whereby the retaining means is prevented from being moved from the groove onto the first surface. As the flow controlling means may be fastened/attached to the retaining means the flow controlling element may be retained in the correct position.

### Drip catcher

In one embodiment, the frame on at least one of its inner surfaces defines a drip catcher adapted to collect distilled water so as to prevent said distilled water from flowing from the first flow path to the second flow path along the inner surface of the frame. In one embodiment, a drip catcher is provided on each of two opposite sides, i.e. the sides extending between the lower and upper sides (on which the outlets and the inlets are provided, respectively). The drip catcher may be plane and extend from an inner surface of the frame and in a direction transverse to one of the plates, whereby a cavity is defined between the plane drip catcher and the frame. The one or more drip catchers may be fluidly connected to the second outlet such that distilled water flowing into the drip catcher will be collected.

### Guiding means for assembly

In one embodiment the frame comprises guiding means for guiding attachment of the plates to the frame. The guiding means may take the form of a protrusion e.g. a pin, extending from one surface of the frame, which protrusion is adapted to engage a corresponding indentation e.g. a hole, in one of the plates.

### Stacking

The device may comprise a plurality of frames arranged between plates to form a stacked structure with a plurality chambers. Due to the few and simple elements stacking of the frames and plates are easily done, and the frames/plates by be held together in a known manner, such as by compression, by engagement of a holding member extending through all the plates and all the frames, by snap-locking the frames and the elements together etc.

### Compression

In one embodiment a top frame forming an upper layer in the stacked structure and a bottom frame forming a bottom layer in the stacked structure, the top and bottom frames facilitating attachment of a compression structure to compress all layers of the stacked structure towards each other.

### Vapour passage

In one embodiment at least one of the plates defines at least one vapour passage allowing vapour to pass through the plate. Except from the plates which define the top and the bottom plates in the device, all the plates define one of the first surfaces on which the waste water flows, and one of the second surfaces on which the distilled water is condensed. Accordingly, it will be appreciated that care should be taken regarding the position, the shape and the size of the pores such that the waste water cannot flow from the first to the second surface and thus contaminate the distilled water. In one embodiment, the vapour passages are provided in the upper part of one or more of the plates, i.e. closed to the inlet than to the outlets, such as in the upper third, such as in the upper fourth, such as in the upper tenth.

In another embodiment the size of each of the pores are chosen such that a droplet cannot pass though the passage while steam (vapour) may pass through the passage. In one embodiment, the passages are circular while in other embodiments the passages define longitudinal passages, which are narrow enough to prevent passage of droplets there through.

In yet another embodiment, the size of the vapour passages vary though out the device such that the size decreased from the lowermost plate to the upper most plate.

In another embodiment, the size and number of the vapour passages are determined by the area of the plates in the device, such that the larger the plates are, the larger the area and number passages are. In one embodiment the area of each of the plates is 0.5 m<2> and two vapour passages - each of 0.5 cm<2> size - are provided in each plate.

It has been found that a controlled distribution of vapour between the chambers improves the yield and energy efficiency of a system.

As the number and position of the vapour passages influence the efficiency of the device, the device may comprise means for blocking one or more of the vapour passages so as to allow the device to be adapted to the location at which it is set up. Such blocking means may be a plug or tape which may be adhered to the first and/or second surface of a plate so as to cover a vapour passage.

Further, the vapour passages may comprise means for opening/closing e.g. temperature activated valves or electronic devices that control the optimum vapour passage. These means would in one embodiment be placed at least as one device for the whole system, and not as a part of the frame.

### Sealing

In order to prevent leakage from a chamber a sealing structure may be provided between the plates and the frame. Like the frame, the sealing structure may be ring-shaped and adapted to engage a surface of the frame and a surface of the plate. In one embodiment, the frame and/or the plate defines a recess for receiving the sealing structure. It will be appreciated that by compressing the frames and the plates towards each other, a seal may be provided- In one embodiment the sealing structure is made from a resilient material like the materials of which O-rings are manufactured, such as natural or artificial rubber.

### BRIEF DESCRIPTION OF THE DRAWINGS

The invention will now be described with reference to the drawings, in which;
Fig. 1 discloses a front elevation view of a plate 100 and a frame 102 according to the invention,
Fig. 2 discloses a gross section view of the frame 102 inlet opening 204 and the gutter shaped groove 203 and the drip nose device 202.
Fig. 3 discloses a cross section of the vapour passage 301 in the frame 102
Fig. 4 discloses a cross section of the frame 102 drip catcher 401
Fig. 5 discloses a cross section of the frame 102 outlet opening 107 and the fluid connection 801 between the one side of the separator 105.
Fig. 6 discloses a cross section of the frame 102 separator 105 and a guiding member 601. Fig. 7 discloses a cross section of the frame 102 separator 105 and a spacer 701 integrated into the separator.
Fig. 8 discloses a cross section of the frame 102 outlet opening 106 and the fluid connection 801 between the one side of the separator 105.

### DETAILED DESCRIPTION OF THE DRAWINGS

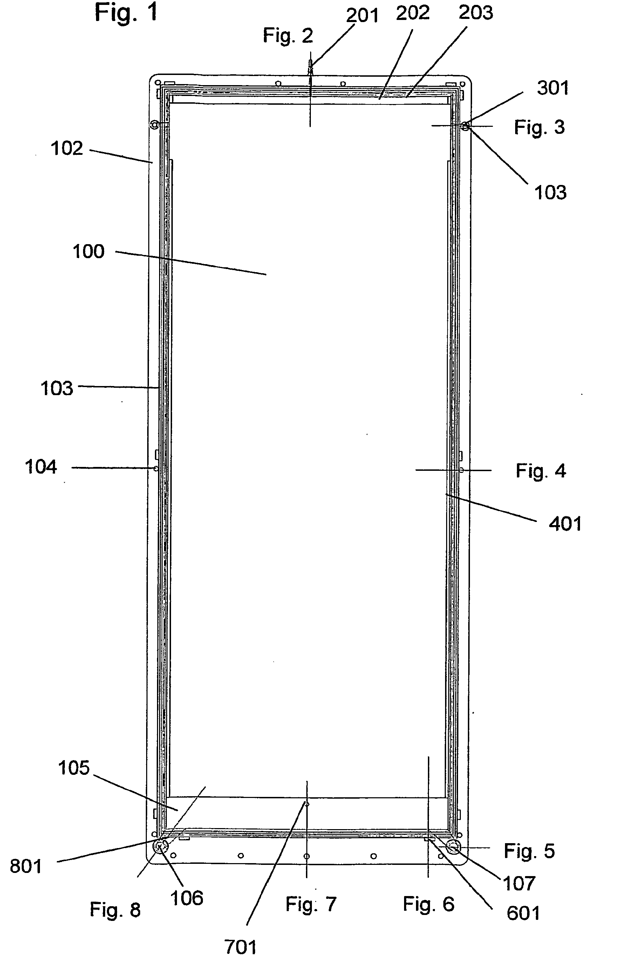

Fig. 1 discloses a front elevation view of a plate 100 and a frame 102 according to the invention. As described in the aforementioned, the device will comprise two or more plates 100 which are provided such that any two neighbouring plates 100 are separated by a frame 102.

In the frame the following is shown: An entry passage 201 for the distilling fluid, a gutter shaped groove for spreading of the distilling fluid 203, a detachable drip nose 202, a vapour passage opening 301, a number of O-ring sealings 103, outlet openings 106 and 107, guiding means for assembly 601, the separator 105, the fixation mean for the separator 701, the outlet passage between the separator gutter and the outlet holes 801, a number of holes for compression means 104 and the drip catcher 401.

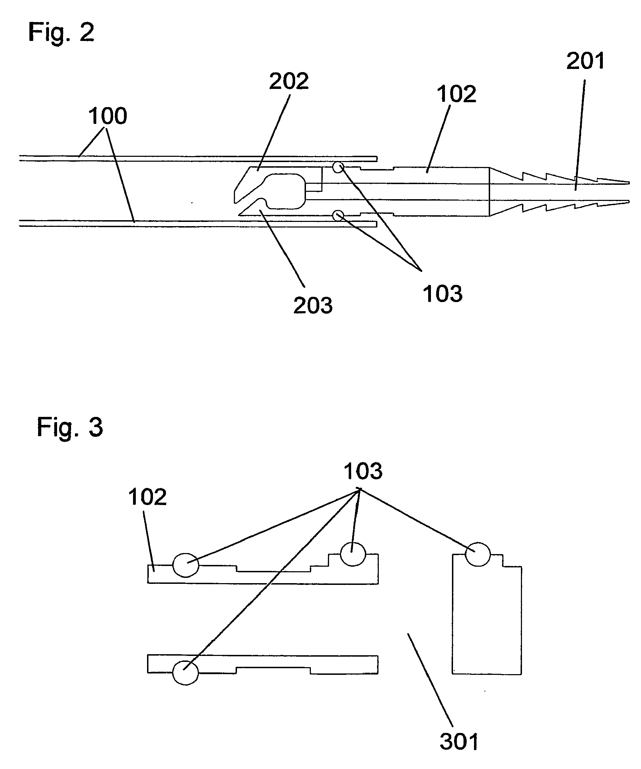

Fig 2 discloses a cross section view of the distilling fluid entry 201 in form of a hose connection. The distilling fluid entry stretches into and through the frame 102 to the u-shaped gutter 203 that will enhance the spreading of the fluid over the width of the plate 100. The drip nose 202 is shown here as a detachable component stretching from one side to the other of the frame 102 or at least over the same distance as the gutter 203. The o-rings 103 on both sides of the frame 102 ensures the vapour and fluid tightness between frame 102 and plates 100.

Fig 3 discloses a cross section of the vapour passage hole 301 in the frame 102 in a form where the vapour passes first through a sideways oriented hole that corresponds with a vertical hole in the frame 102. To avoid loss of vapour an o- ring 103 is placed to seal the vapour passage 301 to one another.

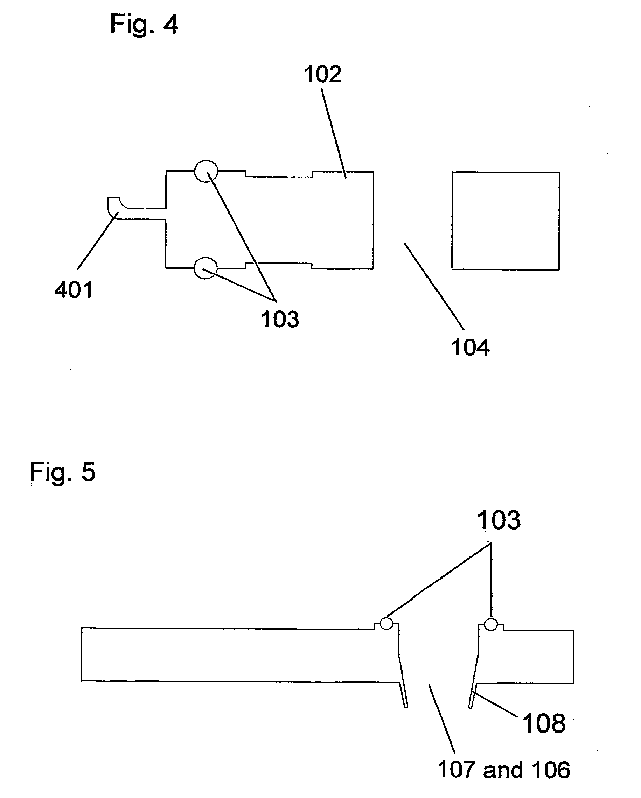

Fig 4 discloses a cross section of a side of the frame 102 where a drip catcher 401 is placed in the inner side of the frame 102. The distillate that is collected in this drip catcher is lead to the upper side of the separator 105 so that the distillate runs off on the upper side of the separator. As shown before o-rings 103 ensures tightness between plates 100 and frame 102. A number of holes

104 throughout the frame 102 are holes in which means for compressing the plates and frames is to be placed e.g. a threaded bolt.

Fig 5 discloses a cross section the identical outlet holes 106 and 107 for the first and second fluid flow. Tightness between frames in a stacked embodiment is ensured by o-rings 103. A combined drip nose and assembly guide is shown in 108 that interlock the frames 102 when being stacked.

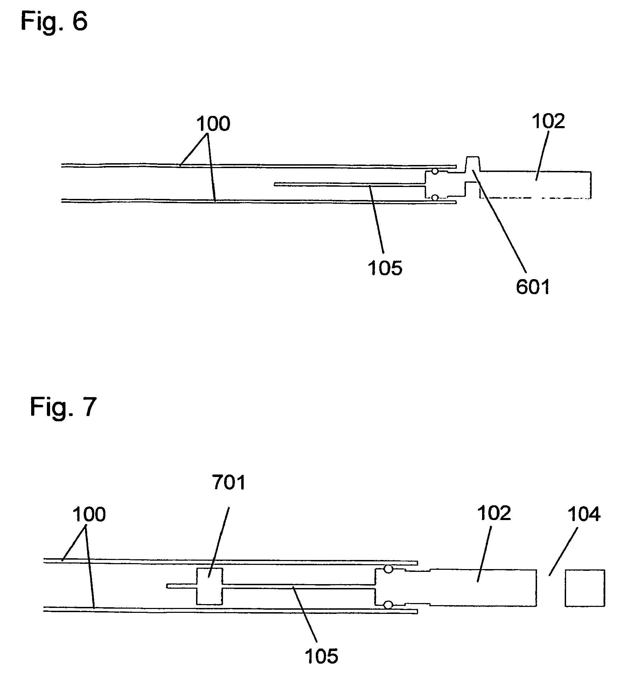

Fig 6 discloses a cross section of the lower end of the frame 102 with 2 plates 100, showing the moulded separator 105 that stretches from the one side of the frame to the other.

Fig 7 discloses a cross section of the lower end of the frame 102 with 2 plates 100, showing the moulded separator 105 that stretches from the one side of the frame to the other and with a spacer 701 that holds the separator 105 in place between the plates 100. 104 is another hole for means of compression.

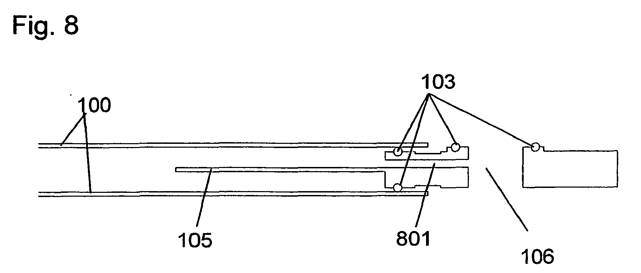

Fig 8 shows a cross section of the lower end of the frame 102 with 2 plates 100, showing the fluid connection 801 between the gutter on one side of the separator 105 and the outlet hole 107 leading one of the fluid flow out. A similar fluid connection 801 is placed on the other side of the separator and corresponds to the other outlet hole 106 leading the other fluid flow out.

## Claims

1. A device for distilling a fluid, the device comprising:
- a first and a second plate (100);
- a frame (102) with opposite outer surfaces being detachably attachable to inner surfaces of the first and second plates (100) and having a shape by which only one chamber is defined by the frame and the inner surfaces, the frame (102) defining:
- an inlet (201) for releasing the fluid into the chamber,
- a first outlet (106) for releasing waste fluid from the chamber,
- a second outlet (107) for releasing distilled fluid from the chamber, and
- a separator (105);
wherein the inlet (201) is arranged to allow the fluid which is released into the chamber to flow in a first flow path along the inner surface of the first plate (100) from the inlet (201) towards the first outlet (106);
wherein the second outlet (107) is arranged in flow communication with a second flow path along the inner surface of the second plate (100) to capture fluid which is formed by condensing on the inner surface of the second plate (100); and
wherein the separator (105) is defined by an essentially plane element formed in one piece with the frame (102) and extending from a location between the outlets (106, 107) in a direction towards the inlet (201) and being arranged between the outer surfaces to separate a part of the chamber into a first space in which the first paths ends and a second space in which the second flow path ends;
wherein the only one chamber defined between the first and second plates (100) is a combined evaporation and condensation chamber with a lower evaporation surface defined by the inner surface of the first plate (100), and an upper condensation surface defined by the inner surface of the second plate (100);
wherein the inlet is formed with a gutter shaped groove (20) extending transversely to the first flow path and being shaped to allow fluid entering the device through the inlet to be distributed over a width of the frame before being released onto the first surface, said gutter shaped groove (203) and frame (102) define a monolithic element;
wherein a drip nose (202) is provided above the gutter shaped groove (203), where the drip nose (202) defines a groove opposite the gutter shaped groove (203), whereby a transversely extending flow channel is defined by the gutter shaped groove (203) and said opposite groove.

2. A device according to claim 1, further comprising a flow controlling element covering at least a part of the gutter shaped groove (203) and the first surface, the flow controlling element being adapted to control a velocity of liquid flowing from the inlet (201) to the first outlet (106) and/or to ensure an even distribution of the liquid over at least a part of the first surface.

3. A device according to any of the preceding claims, wherein the frame on at least one of its inner surfaces defines a drip catcher (401) adapted to collect distilled water so as to prevent said distilled water from flowing from the first flow path to the second flow path along the inner surface of the frame (102).

4. A device according to any of the preceding claims, wherein the frame (102) comprises guiding means (601) for guiding attachment of the plates to the frame.

5. A device according to any of the preceding claims, comprising a plurality of frames (102) arranged between plates (100) to form a stacked structure with a plurality chambers.

6. A device according to claim 5, comprising a top frame (102) forming an upper layer in the stacked structure and a bottom frame (102) forming a bottom layer in the stacked structure, the top and bottom frames (102) facilitating attachment of a compression structure (104) to compress all layers of the stacked structure towards each other.

7. A device according to any of the preceding claims, wherein at least one of the plates (100) defines at least one vapour passage (301) allowing vapour to pass through the plate (100).

8. A device according to any of the preceding claims, wherein the plates (100) are made from an essentially planer sheet of metal.

9. A device according to any of the preceding claims, wherein the outer surfaces comprises a sealing structure (103) for sealing fluid tightly against the inner surfaces when biased there against.

## Patentansprüche

1. Vorrichtung zum Destillieren einer Flüssigkeit, die Folgendes umfasst:
- eine erste und eine zweite Platte (100);
- einen Rahmen (102), dessen einander gegenüberliegende Außenflächen lösbar an den Innenflächen der ersten und zweiten Platten (100) befestigbar sind, wobei der Rahmen so ausgebildet ist, dass lediglich eine Kammer durch den Rahmen und die Innenflächen definiert ist, wobei der Rahmen (102) Folgendes bestimmt:
- einen Einlass (201) zum Einlassen der Flüssigkeit in die Kammer,
- einen ersten Auslass (106) zum Auslassen von Abwasser aus der Kammer,
- einen zweiten Auslass (107) zum Auslassen destillierten Wassers aus der Kammer und
- einen Abscheider (105);
wobei der Einlass (201) so angeordnet ist, dass die Flüssigkeit, die in die Kammer eingelassen wird, über einen ersten Fließweg entlang der Innenfläche der ersten Platte (100) von dem Einlass (201) in Richtung des ersten Auslasses (106) geführt werden kann; wobei der zweite Auslass (107) in Fließverbindung mit einem zweiten Fließweg entlang der Innenfläche der zweiten Platte (100) angeordnet ist, um Flüssigkeit aufzufangen, die durch Kondensation an der Innenfläche der zweiten Platte (100) gebildet wird; und
wobei der Abscheider (105) durch ein im Wesentlichen ebenes Element definiert ist, das einstückig mit dem Rahmen (102) ausgebildet ist und sich von einer Position zwischen den Auslässen (106, 107) in Richtung auf den Einlass (201) erstreckt, wobei das Element zwischen den Außenflächen angeordnet ist, um einen Teil der ersten Kammer in einen ersten Raum, in dem der erste Fließweg endet, und in einen zweiten Raum, in dem der zweite Fließweg endet, zu trennen;
wobei die lediglich eine zwischen der ersten und der zweiten Platte (100) definierte Kammer eine kombinierte Verdampfungs- und Kondensationskammer ist und eine durch die Innenfläche der ersten Platte definierte untere Verdampfungsfläche aufweist, sowie eine obere Kondensationsfläche, die durch die Innenfläche der zweiten Platte (100) definiert ist;
wobei der Einlass mit einer sich quer zum ersten Fließweg erstreckenden abflussförmigen Nut (20) ausgebildet ist, die so geformt ist, dass durch den Einlass in die Vorrichtung eintretende Flüssigkeit über die Breite des Rahmens verteilt wird, bevor sie auf die erste Fläche abgegeben wird, wobei die abflussförmige Nut (203) und der Rahmen (102) ein monolithisches Element definieren;
wobei eine Tropfnase (202) oberhalb der abflussförmigen Nut (203) angeordnet ist, wobei die Tropfnase (202) eine Nut gegenüber der abflussförmigen Nut (203) definiert, wodurch ein sich quer erstreckender Fließkanal durch die abflussförmige Nut (203) und die gegenüberliegende Nut definiert wird.

2. Vorrichtung nach Anspruch 1, die weiterhin ein Element zur Fließsteuerung umfasst, das wenigstens einen Teil der abflussförmigen Nut (203) und die erste Fläche bedeckt, wobei das Element zur Fließsteuerung so angepasst ist, dass es die Geschwindigkeit der von dem Einlass (201) zum ersten Auslass (106) fließenden Flüssigkeit steuert und/oder eine gleichmäßige Verteilung der Flüssigkeit über zumindest einen Teil der ersten Fläche sicherstellt.

3. Vorrichtung nach einem der vorangehenden Ansprüche, bei der der Rahmen an wenigstens einer seiner Innenflächen einen Tropfenfänger (401) aufweist, der so ausgebildet ist, dass er destilliertes Wasser auffängt, um zu verhindern, dass dieses vom ersten Fließweg zum zweiten Fließweg entlang der Innenfläche des Rahmens (102) fließt.

4. Vorrichtung nach einem der vorangehenden Ansprüche, bei der der Rahmen (102) Führungsmittel (601) zur geführten Befestigung der Platten an dem Rahmen aufweist.

5. Vorrichtung nach einem der vorangehenden Ansprüche, die eine Mehrzahl von zwischen den Platten (100) angeordneten Rahmen (102) aufweist, die einen gestapelten Aufbau mit einer Mehrzahl von Kammern bilden.

6. Vorrichtung nach Anspruch 5, die einen oberen Rahmen (102) aufweist, der eine obere Ebene in dem gestapelten Aufbau bildet und einen unteren Rahmen (102), der die untere Ebene in dem gestapelten Aufbau bildet, wobei der oberste und der unterste Rahmen (102) die Befestigung eines Kompressionsaufbaus (104) erleichtern, um alle der gestapelten Ebenen des Aufbaus gegeneinander zu pressen.

7. Vorrichtung nach einem der vorangehenden Ansprüche, bei der wenigstens eine der Platten (100) wenigstens einen Dampfdurchlass (301) definiert, der erlaubt, dass Dampf die Platte (100) passieren kann.

8. Vorrichtung nach einem der vorangehenden Ansprüche, bei der die Platten (100) aus einem im Wesentlichen ebenen Material ausgebildet sind.

9. Vorrichtung nach einem der vorangehenden Ansprüche, bei der die Außenflächen einen Versiegelungsaufbau (103) aufweisen, um die Flüssigkeit dicht gegen die Innenflächen zu versiegeln, wenn sie gegeneinander vorgespannt sind.

## Revendications

1. Dispositif destiné à distiller un fluide, le dispositif comprenant :
- une première et une deuxième plaques (100) ;
- un cadre (102) avec des surfaces externes opposées, lesquelles peuvent être attachées de façon amovible à des surfaces internes des première et deuxième plaques (100), et présentant une forme suivant laquelle une chambre seulement est définie par le cadre et les surfaces internes, le cadre (102) définissant :
- un orifice d'admission (201) pour amener le fluide dans la chambre,
- un premier orifice de sortie (106) pour évacuer le fluide de rejet hors de la chambre,
- un deuxième orifice de sortie (107) pour évacuer le fluide distillé hors de la chambre, et
- un séparateur (105) ;
cas dans lequel l'orifice d'admission (201) est agencé de façon à permettre au fluide, qui est amené dans la chambre, de s'écouler suivant un premier trajet d'écoulement le long de la surface interne de la première plaque (100) à partir de l'orifice d'admission (201) jusqu'au premier orifice de sortie (106) ;
cas dans lequel le deuxième orifice de sortie (107) est agencé de façon à être en communication d'écoulement avec un deuxième trajet d'écoulement le long de la surface interne de la deuxième plaque (100) afin de capter le fluide qui est formé grâce à la condensation ayant lieu sur la surface interne de la deuxième plaque (100) ; et
cas dans lequel le séparateur (105) est défini par un élément essentiellement plat lequel est formé d'un seul tenant avec le cadre (102) et se prolonge à partir d'un emplacement situé entre les orifices de sortie (106, 107) suivant un sens allant vers l'orifice d'admission (201), et est agencé entre les surfaces externes afin de séparer une partie de la chambre en un premier espace, dans lequel se termine le premier trajet, et en un deuxième espace, dans lequel se termine le deuxième trajet d'écoulement ;
cas dans lequel ladite une chambre, définie entre les première et deuxième plaques (100), est une chambre combinée d'évaporation et de condensation, alors qu'une surface d'évaporation inférieure est définie par la surface interne de la première plaque (100), et qu'une surface de condensation supérieure est définie par la surface interne de la deuxième plaque (100) ;
cas dans lequel l'orifice d'admission est formé avec une rainure en forme de gouttière (20) laquelle s'étend dans le plan transversal par rapport au premier trajet d'écoulement, et est façonnée pour permettre au fluide entrant dans le dispositif à travers l'orifice d'amission d'être distribué sur une certaine largeur du cadre avant d'être amené sur la première surface, ladite rainure en forme de gouttière (203) et le cadre (102) définissant un élément monolithique ;
cas dans lequel un bec d'égouttage (202) est prévu au-dessus de la rainure en forme de gouttière (203), alors que le bec d'égouttage (202) définit une rainure en face de la rainure en forme de gouttière (203), par conséquent un conduit d'écoulement s'étendant dans le plan transversal est ainsi défini par la rainure en forme de gouttière (203) et ladite rainure opposée.

2. Dispositif selon la revendication 1, comprenant en outre un élément de régulation de flux lequel couvre au moins une partie de la rainure en forme de gouttière (203) et la première surface, l'élément de régulation de flux étant conçu pour piloter une vitesse de liquide coulant depuis l'orifice d'admission (201) vers le premier orifice de sortie (106) et/ou pour veiller à une distribution uniforme du liquide sur au moins une partie de la première surface.

3. Dispositif selon l'une quelconque des revendications précédentes, le cadre sur au moins une de ses surfaces internes définissant un dispositif de récupération de gouttes (401) conçu pour collecter de l'eau distillée de sorte à éviter que ladite eau distillée ne coule du premier trajet d'écoulement vers le deuxième trajet d'écoulement le long de la surface interne du cadre (102).

4. Dispositif selon l'une quelconque des revendications précédentes, le cadre (102) comprenant des moyens de guidage (601) pour guider l'opération de fixation des plaques sur le cadre.

5. Dispositif selon l'une quelconque des revendications précédentes, comprenant une pluralité de cadres (102) lesquels sont agencés entre les plaques (100) afin de former une structure empilée avec une pluralité de chambres.

6. Dispositif selon la revendication 5, comprenant un cadre supérieur (102) lequel forme une couche supérieure dans la structure empilée, et un cadre inférieur (102) lequel forme une couche inférieure dans la structure empilée, les cadres supérieur et inférieur (102) facilitant la fixation d'une structure de compression (104) destinée à comprimer toutes les couches de la structure empilée les unes vers les autres.

7. Dispositif selon l'une quelconque des revendications précédentes, au moins l'une des plaques (100) définissant au moins un passage à vapeur (301) qui permet à la vapeur de passer à travers la plaque (100).

8. Dispositif selon l'une quelconque des revendications précédentes, les plaques (100) étant fabriquées à partir d'une feuille de métal essentiellement plane.

9. Dispositif selon l'une quelconque des revendications précédentes, les surfaces externes comprenant une structure d'étanchéisation (103) pour sceller fermement le fluide contre les surfaces internes lorsqu'elle est sollicitée contre celles-ci.
